(19) Europäisches Patentamt / European Patent Office / Office européen des brevets

(11) **EP 4 477 692 A1**

(12) **EUROPEAN PATENT APPLICATION**
published in accordance with Art. 153(4) EPC

(43) Date of publication:
**18.12.2024 Bulletin 2024/51**

(21) Application number: **23749523.9**

(22) Date of filing: **18.01.2023**

(51) International Patent Classification (IPC):
**C08J 9/18** (2006.01)

(52) Cooperative Patent Classification (CPC):
**C08J 9/18**

(86) International application number:
**PCT/JP2023/001337**

(87) International publication number:
**WO 2023/149207 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2022 JP 2022017426**

(71) Applicant: **JSP Corporation**
**Tokyo 100-0005 (JP)**

(72) Inventors:
• OI, Takashi
Kanuma-shi, Tochigi 322-0014 (JP)
• OHTA, Hajime
Kanuma-shi, Tochigi 322-0014 (JP)

(74) Representative: **Gille Hrabal**
**Partnerschaftsgesellschaft mbB**
**Patentanwälte**
**Brucknerstraße 20**
**40593 Düsseldorf (DE)**

(54) **POLYPROPYLENE-BASED RESIN FOAM PARTICLES, METHOD FOR PRODUCING POLYPROPYLENE-BASED RESIN FOAM PARTICLES, AND LOGISTICS PACKAGING MATERIAL**

(57)     An expanded bead having a mass ratio of an expanded core layer to a covering layer of from 97:3 to 88:12, a bulk expansion ratio of 5 times or more and 45 times or less, wherein the covering layer is composed of PE-LLD, the PE-LLD has a melting point of 105°C or higher and 130°C or lower, and the PE-LLD has a flexural modulus Ms of 120 MPa or more and 600 MPa or less. A logistics cushioning material composed of an expanded beads molded article, which has a molded article expansion ratio of 5 times or more and 45 times or less, a maximum bending strength of 0.3 MPa or more, a product of tensile strength and tensile elongation of 18 MPa·% or more, and a dynamic friction coefficient with respect to a polyvinyl chloride sheet of 0.4 or more and less than 0.7, and a static friction coefficient with respect to a polyvinyl chloride sheet of less than 1.0.

EP 4 477 692 A1

**Description**

TECHNICAL FIELD

The present invention relates to a polypropylene-based resin expanded bead, a method for producing a polypropylene-based resin expanded bead, and a logistics cushioning material.

BACKGROUND ART

Expanded beads molded articles obtained by in-mold molding of polypropylene-based resin expanded beads have excellent rigidity and energy absorption performance, and therefore are utilized as impact absorbers, heat insulating materials, various packaging materials, and the like in a wide range of fields such as food containers, packaging or cushioning materials for electric/electronic parts and automobile parts or the like, vehicle parts such as automobile bumpers, automobile interior materials, building parts such as residential insulation materials, miscellaneous goods, and the like.

For example, PTL1 discloses a polypropylene-based resin expanded bead, which is a multi-layer expanded bead formed by expanding a multi-layered resin particle composed of a core layer and a covering layer formed of a polypropylene-based resin and in which the weight ratio of the core layer to the covering layer is within a specific range, wherein the resin melting point, partial heat of fusion, and flexural modulus of the polypropylene-based resin forming the core layer, and the resin melting point, partial heat of fusion, and flexural modulus of the polypropylene-based resin forming the covering layer, each satisfy a specific relationship.

CITATION LIST

PATENT LITERATURE

PTL1: JP 2011-16914 A

SUMMARY OF INVENTION

TECHNICAL PROBLEM

Polypropylene-based resin expanded beads molded articles are lighter and more rigid than polyethylene-based resin expanded beads molded articles, and therefore are sometimes used as a logistics cushioning material, such as a packaging container.

However, when a packaged item is transported in a packaged state using a polypropylene-based resin expanded beads molded article as a packaging container, the packaged item may be damaged due to vibrations and the like during transportation. In addition, there have been cases where the expanded beads molded article was damaged.

Therefore, an object of the present invention is to provide polypropylene-based resin expanded beads, and a method for producing a polypropylene-based resin expanded bead, which can form an expanded beads molded article having excellent rigidity. In addition, it is an object of the present invention to provide polypropylene-based resin expanded beads that can be used in in-mold molding to form an expanded beads molded article, which when used as a logistics cushioning material, for example, can suppress damage to a packaged item and to the expanded beads molded article during transportation, and a method for producing such polypropylene-based resin expanded beads, as well as a logistics cushioning material produced therefrom.

SOLUTION TO PROBLEM

The present inventors have found that the object can be attained by adopting a configuration given below, reaching the completion of the present invention.

Specifically, the present invention is as follows.

<1> A polypropylene-based resin expanded bead comprising: an expanded core layer composed of a polypropylene-based resin; and a covering layer covering the expanded core layer, wherein a mass ratio of the expanded core layer to the covering layer is expanded core layer:covering layer = 97:3 to 88:12, the polypropylene-based resin expanded beads have a bulk expansion ratio of 5 times or more and 45 times or less, the covering layer is composed of a linear low density polyethylene, the linear low density polyethylene has a melting point of 105°C or higher and 130°C or lower, and the linear low density polyethylene has a flexural modulus Ms of 120 MPa or more and 600 MPa or less.

<2> The polypropylene-based resin expanded bead according to <1>, wherein the linear low density polyethylene is a resin polymerized using a metallocene polymerization catalyst.

<3> The polypropylene-based resin expanded bead according to <1> or <2>, wherein the polypropylene-based resin has a flexural modulus Mc of 550 MPa or more and 1600 MPa or less.

<4> The polypropylene-based resin expanded bead according to any one of <1> to <3>, wherein a ratio Ms/Mc of the flexural modulus Ms of the linear low density polyethylene to a flexural modulus Mc of the polypropylene-based resin is 0.2 or more and 0.6 or less.

<5> The polypropylene-based resin expanded bead according to any one of <1> to <4>, wherein the expanded beads have an average cell diameter of 50 $\mu$m or more and 200 $\mu$m or less.

<6> The polypropylene-based resin expanded bead according to any one of <1> to <5>, wherein the expanded bead has an aspect ratio L/D of 0.8 or more and 1.3 or less.

<7> The polypropylene-based resin expanded bead according to any one of <1> to <6>, wherein the linear low density polyethylene has a melt flow rate measured at 190°C and a load of 2.16 kg of 2.5 g/10 min or more and 12 g/10 min or less.

<8> The polypropylene-based resin expanded bead according to any one of <1> to <7>, wherein the linear low density polyethylene has a flexural modulus Ms of more than 250 MPa and 500 MPa or less.

<9> A method for producing a polypropylene-based resin expanded bead that comprises an expanded core layer composed of a polypropylene-based resin and a covering layer covering the expanded core layer, wherein a mass ratio of the expanded core layer to the covering layer is expanded core layer:covering layer = 97:3 to 88:12, the polypropylene-based resin expanded beads have a bulk expansion ratio of 5 times or more and 45 times or less, the covering layer is composed of a linear low density polyethylene, the linear low density polyethylene has a melting point of 105°C or higher and 130°C or lower, the linear low density polyethylene has a flexural modulus Ms of 120 MPa or more and 600 MPa or less, and the method comprises the following steps (A) to (C):

step (A): a dispersion step of dispersing a multi-layered resin particle having a core layer that is composed of a polypropylene-based resin and that is in a non-expanded state and a covering layer that is composed of a polyethylene-based resin and that covers the core layer in a dispersing medium in a sealable vessel;
step (B): a blowing agent impregnation step of impregnating the multi-layered resin particle with a blowing agent; and
step (C): an expansion step of producing an expanded bead by releasing the expandable multi-layered resin particle impregnated with the blowing agent together with the dispersing medium from in the sealable vessel into an atmosphere having a lower pressure than the pressure in the sealable vessel to form an expanded core layer by expanding at least the core layer.

<10> A logistics cushioning material comprising a polypropylene-based resin expanded beads molded article formed by fusion bonding polypropylene-based resin expanded beads together, wherein each polypropylene-based resin expanded bead has an expanded core layer composed of a polypropylene-based resin and a covering layer covering the expanded core layer, the covering layer is composed of a linear low density polyethylene, the polypropylene-based resin expanded beads molded article has a molded article expansion ratio of 5 times or more and 45 times or less, the polypropylene-based resin expanded beads molded article has a maximum bending strength of 0.3 MPa or more, the polypropylene-based resin expanded beads molded article has a product of a tensile strength S (MPa) and a tensile elongation E (%) of the polypropylene-based resin expanded beads molded article of 18 MPa·% or more, a dynamic friction coefficient with respect to a polyvinyl chloride sheet is 0.4 or more and less than 0.7, and a static friction coefficient with respect to a polyvinyl chloride sheet is less than 1.0.

<11> The logistics cushioning material according to <10>, having a dynamic friction coefficient with respect to a steel plate of 0.3 or more and less than 0.6, and a static friction coefficient with respect to a steel plate of 0.5 or less.

ADVANTAGEOUS EFFECT OF INVENTION

An expanded beads molded article obtained by the present invention has excellent rigidity. Further, it is possible to provide a polypropylene-based resin expanded bead that can be used in in-mold molding to form an expanded beads molded article, which when used as a logistics cushioning material, for example, can suppress damage to a packaged item and to the expanded beads molded article during transportation, and a method for producing such polypropylene-based resin expanded beads, as well as a logistics cushioning material produced therefrom.

DESCRIPTION OF EMBODIMENTS

[Polypropylene-based resin expanded bead]

The polypropylene-based resin expanded bead of the present invention (hereinafter, also simply referred to as "polypropylene-based resin expanded bead" or "expanded bead") comprises an expanded core layer composed of a polypropylene-based resin, and a covering layer covering the expanded core layer, wherein a mass ratio of the expanded core layer to the covering layer is expanded core layer:covering layer = 97:3 to 88:12, the polypropylene-based resin expanded beads have a bulk expansion ratio of 5 times or more and 45 times or less, the covering layer is composed of a linear low density polyethylene, the linear low density polyethylene has a melting point of 105°C or higher and 130°C or lower, and the linear low density polyethylene has a flexural modulus Ms of 120 MPa or more and 600 MPa or less. The shape of the expanded bead is not particularly limited, but is, for example, a columnar shape.

By having the above configuration, the polypropylene-based resin expanded bead of the present invention can be used in in-mold molding to form an expanded beads molded article having excellent rigidity. Further, since the expanded beads molded article obtained has excellent toughness, when the expanded beads molded article is used as, for example, a logistics cushioning material, damage to the expanded beads molded article during transportation can be suppressed. In addition, since the expanded beads molded article obtained has appropriate grip properties and sliding properties, it is possible to prevent the packaged item from being damaged during transportation. The logistics cushioning material can exhibit the above effects even when the packaged object is a heavy item, such as an automobile battery or transfer case.

<Mass ratio of expanded core layer to covering layer>

The mass ratio of the expanded core layer to the covering layer is expanded core layer:covering layer=97:3 to 88:12. If the mass ratio of the covering layer is too large, the toughness and grip properties of the expanded beads molded article obtained may decrease. On the other hand, if the mass ratio of the covering layer is too small, the toughness and sliding properties of the expanded beads molded article obtained may decrease. From these viewpoints, the mass ratio of the expanded core layer to the covering layer is preferably 96:4 to 89:11, and more preferably 95:5 to 90:10.

<Bulk expansion ratio>

The bulk expansion ratio of the polypropylene-based resin expanded beads is 5 times or more and 45 times or less. If the bulk expansion ratio of the expanded beads is too high, the toughness and sliding properties of the expanded beads molded article obtained may be significantly reduced. Further, for example, when the expanded beads molded article is used as a packaging material for transporting a heavy object such as automobile battery or transfer case, the expanded beads molded article may lack rigidity. From this viewpoint, the bulk expansion ratio of the polypropylene-based resin expanded beads is preferably 35 times or less, more preferably 30 times or less, and further preferably 25 times or less. On the other hand, from the viewpoint of a lighter weight and the moldability of the molded article, the bulk expansion ratio of the polypropylene-based resin expanded beads is preferably 7 times or more, and more preferably 10 times or more. From the above viewpoints, the bulk expansion ratio of the polypropylene-based resin expanded beads is preferably from 7 to 35 times, more preferably from 10 to 30 times, and further preferably from 10 to 25 times.

The bulk expansion ratio of the expanded beads is determined as follows. Expanded beads are randomly taken out from a group of expanded beads, and charged into a graduated cylinder with a volume of 1 L. A large number of expanded beads are charged up to the 1 L gradation mark in a manner such that the expanded beads naturally settle. The mass of the charged expanded beads W1 (g) is divided by the volume V1 (1 (L)) to obtain (W1/V1), which is converted into units to obtain the bulk density (kg/m$^3$) of the expanded beads.

Then, the density (kg/m$^3$) of the resin constituting the expanded core layer of the expanded bead is divided by the bulk density (g/cm$^3$) of the expanded beads, which is determined in advance.

The average cell diameter of the polypropylene-based resin expanded beads is preferably 50 $\mu$m or more and 200 $\mu$m or less. From the viewpoint of further enhancing the moldability of the expanded bead, the average cell diameter is preferably 70 $\mu$m or more, more preferably 80 $\mu$m or more, and further preferably 90 $\mu$m or more. On the other hand, from the viewpoint of further improving the surface smoothness of the expanded beads molded article obtained, the average cell diameter is preferably 180 $\mu$m or less, more preferably 165 $\mu$m or less, further preferably 150 $\mu$m or less, and still further preferably 140 $\mu$m or less. From the above viewpoints, the average cell diameter of the polypropylene-based resin expanded beads is preferably from 70 to 180 $\mu$m, more preferably from 80 to 165 $\mu$m, further preferably from 90 to 150 $\mu$m, and still further preferably from 90 to 140 $\mu$m.

The average cell diameter of the expanded beads is measured as follows. From a group of expanded beads, 20 or more expanded beads are randomly selected. The expanded beads are cut through the center and divided into two parts, and an enlarged photograph of the entire cross section is taken using a microscope such as a scanning electron microscope. In each cross-sectional photograph, four line segments are drawn at equal angles (45°) from the outermost surface of the expanded bead through the center to the outermost surface on the opposite side. The cell diameter of each expanded bead is determined by measuring the number of cells that intersect with each line segment and dividing the total length of the four line segments by the total number of cells that intersect with the line segment. The value obtained by arithmetic averaging these values is defined as the average cell diameter of the expanded beads.

The aspect ratio LID of the polypropylene-based resin expanded bead is, from the viewpoint of improving the filling properties of the expanded bead and improving the rigidity of the molded article, preferably 0.8 or more and 1.4 or less. Further, the aspect ratio LID is more preferably 0.9 or more and 1.3 or less, and further preferably more than 0.9 and less than 1.3.

The aspect ratio LID of the expanded bead is determined by measuring, for 100 randomly selected expanded beads, the maximum length (L) in the axis direction of the expanded bead and the maximum cross-sectional diameter (D) of the cross section of the bead in the direction orthogonal to the length direction of the maximum length with a caliper, calculating the ratio (L/D), and taking the arithmetic average of the values.

<Closed cell ratio>

The closed cell ratio of the expanded bead is preferably 85% or more, more preferably 90% or more, and further preferably 95% or more. In this case, the moldability of the expanded bead and the rigidity of the expanded beads molded article obtained and the like can be further improved. The closed cell ratio of the expanded bead can be measured using an air comparison pycnometer based on ASTM D2856-70.

<High temperature peak>

The expanded bead preferably has a crystal structure in which, on a differential scanning calorimetry (DSC) curve obtained by heating expanded beads from 23°C to 200°C at a heating rate of 10°C/min by heat flux DSC, one or more endothermic peaks (hereinafter referred to as "high-temperature peaks") appear on the higher temperature side than the apex of the endothermic peak (hereinafter referred to as "specific peak") specific to the polypropylene-based resin that constitutes the core layer. In this case, the moldability of the expanded bead can be further improved, and the rigidity of the expanded beads molded article obtained can be further increased. From this viewpoint, the heat of fusion of the high-temperature peak is preferably from 5 to 50 J/g, more preferably from 8 to 40 J/g, and further preferably from 10 to 30 J/g.

<Covering layer>

The covering layer of the polypropylene-based resin expanded bead (hereinafter, also simply referred to as "covering layer") is composed of a polyethylene-based resin, and covers the expanded core layer composed of a polypropylene-based resin. If the expanded bead does not have the covering layer, or if the resin constituting the covering layer is, for example, a polypropylene-based resin, the toughness of the expanded beads molded article obtained may be reduced, or the sliding properties may be significantly reduced.

From the viewpoint of reliably achieving the object and advantageous effects of the present invention, the content of polyethylene-based resin in the covering layer is 50% by mass or more, preferably 60% by mass or more, more preferably 70% by mass or more, further preferably 80% by mass or more, and still further preferably 90% by mass or more, and most preferably 100% by mass, that is, the covering layer includes substantially only polyethylene-based resin as a polymer.

The proportion of the covering layer relative to the total surface area of the expanded bead (coverage rate of the expanded core layer by the covering layer) is, from the viewpoint of obtaining a sufficient effect from the covering layer, preferably 50% or more, and more preferably 60% or more.

The covering layer is preferably in a non-expanded state from the viewpoint of further improving the grip properties and sliding properties of the molded article. Here, "non-expanded state" includes not only a state where no cells are present in the covering layer, but also a substantially non-expanded state where only very small cells are present. Further, the state in which no cells are present in the covering layer includes the state in which cells that had been formed have since ruptured and disappeared.

(Polyethylene-based resin)

The covering layer is composed of a linear low density polyethylene (PE-LLD). The linear low density polyethylene is a linear copolymer of ethylene and an $\alpha$-olefin. The $\alpha$-olefin constituting the copolymer usually has from 4 to 10 carbon atoms. Since the covering layer is composed of a linear low density polyethylene, an expanded beads molded article obtained by molding expanded beads having a covering layer in a mold has excellent toughness and also has appropriate grip properties and sliding properties. As a result, when the expanded beads molded article is used as, for example, a logistics cushioning material, damage to the packaged item and the expanded beads molded article during transportation can be suppressed.

The linear low density polyethylene constituting the covering layer is preferably a linear low density polyethylene polymerized using a metallocene polymerization catalyst. In this case, the effects of the covering layer can be obtained more stably than when polymerization is performed using a Ziegler-Natta polymerization catalyst or the like.

«Linear low density polyethylene (PE-LLD)»

-Density-

The linear low density polyethylene (PE-LLD) constituting the covering layer has a density of, from the viewpoint of easily obtaining an expanded beads molded article that combines toughness, grip properties, and sliding properties, preferably 0.905 g/cm$^3$ or more, more preferably 0.910 g/cm$^3$ or more, and further preferably 0.920 g/cm$^3$ or more, and preferably 0.950 g/cm$^3$ or less, more preferably 0.940 g/cm$^3$ or less, and further preferably 0.930 g/cm$^3$ or less.

The density of the PE-LLD is measured, for example, according to method B (pycnometer method) described in JIS K 7112:1999.

-Melting point Tms-

The PE-LLD constituting the covering layer has a melting point Tms of 105°C or higher and 130°C or lower. If the melting point of the PE-LLD constituting the covering layer is too low, it may be difficult to obtain a molded article having excellent toughness and sliding properties. From this viewpoint, the melting point Tms of the PE-LLD constituting the covering layer is preferably 108°C or higher, more preferably 110°C or higher, and further preferably 115°C or higher. On the other hand, if the melting point of the PE-LLD constituting the covering layer is too high, it may be difficult to obtain a molded article having excellent toughness. From this viewpoint, the melting point Tms of the PE-LLD constituting the covering layer is preferably 128°C or lower, and more preferably 125°C or lower. From the above viewpoints, the melting point Tms of the PE-LLD constituting the covering layer is preferably from 108 to 128°C, more preferably from 110 to 125°C, and further preferably from 115 to 125°C.

The melting point Tms of the PE-LLD is determined by, based on JIS K 7121:1987, conditioning a test piece in accordance with "(2) Case of measuring melting temperature after carrying out a certain heat treatment", acquiring a DSC curve for the conditioned test piece by increasing its temperature from 30°C to 200°C at a heating rate of 10°C/min, and taking the apex temperature of the melting peak associated with the melting of the resin on the DSC curve as the melting point Tms. When a plurality of melting peaks appear on the DSC curve, the apex temperature of the melting peak with the largest area is taken as the melting point.

-Flexural modulus Ms-

The PE-LLD constituting the covering layer has a flexural modulus Ms of 120 MPa or more and 600 MPa or less. If the flexural modulus of PE-LLD constituting the covering layer is too low, the sliding properties and toughness of the molded article may decrease. From this viewpoint, the flexural modulus Ms of the PE-LLD constituting the covering layer is preferably 140 MPa or more, more preferably 200 MPa or more, and further preferably more than 250 MPa. On the other hand, if the flexural modulus of the PE-LLD constituting the covering layer is too high, the toughness of the molded article may decrease. From this viewpoint, the flexural modulus Ms of the PE-LLD constituting the covering layer is preferably 550 MPa or less, more preferably 500 MPa or less, and further preferably 450 MPa or less. From the above viewpoints, the flexural modulus Ms of the PE-LLD constituting the covering layer is preferably from 140 to 550 MPa, more preferably from 200 to 500 MPa, and further preferably 250 to 450 MPa.

The flexural modulus Ms of the PE-LLD is determined based on JIS K 7171:2016.

-Melt flow rate-

The PE-LLD constituting the covering layer has a melt flow rate (MFR) of, for example, from the viewpoint of easier production of an expanded bead having an aspect ratio of 0.8 or more and 1.3 or less, and the viewpoint of improving the coverage rate of the expanded core layer by the covering layer to more stably exhibit the object and advantageous effects of the present application, preferably from 2.5 to 12 g/10 min, more preferably from 3.0 to 12 g/10 min, and further preferably 3.5 to 12 g/10 min.

The MFR of the PE-LLD is measured at a temperature of 190°C and a load of 2.16 kg in accordance with JIS K 7210-1:2014.

The polyethylene-based resin constituting the covering layer may contain other polyethylene-based resins other than a linear low density polyethylene, such as a low density polyethylene and a high-density polyethylene. However, from the viewpoint of further improving the action and effect of the linear low density polyethylene, the proportion of the linear low density polyethylene in the polyethylene-based resin constituting the covering layer is preferably 80% by mass or more, more preferably 90% by mass or more, and most preferably 100% by mass, that is, the polyethylene-based resin contains only the linear low density polyethylene as a polymer.

The covering layer may contain other polymers and additives other than the polyethylene-based resin as appropriate, as long as the advantageous effects of the present invention are not inhibited. Examples of the other polymers include thermoplastic resins such as a polypropylene-based resin and a polystyrene resin, elastomers, and the like. The content of the other polymers in the covering layer is, based on the total mass of the covering layer, preferably 10% by mass or less, more preferably 5% by mass or less, further preferably 3% by mass or less, and particularly preferably 0% by mass, that is, the covering layer contains only polyethylene-based resin as a polymer. Examples of the additives include a cell adjusting agent, a lubricant, a flame retardant, a flame retardant synergist, a colorant, a cell nucleating agent, a plasticizers, an antistatic agent, an antioxidant, a UV absorbing agent, a light stabilizer, a conductive filler, an antimicrobial agent, and the like.

<Expanded core layer>

The expanded core layer of the polypropylene-based resin expanded bead (hereinafter, also simply referred to as "expanded core layer") is composed of a polypropylene-based resin and is in an expanded state. "Polypropylene-based resin" refers to a homopolymer of a propylene monomer or a propylene copolymer containing 50% by mass or more of a structural unit derived from propylene.

(Polypropylene-based resin)

Examples of the polypropylene-based resin include a propylene homopolymer, a propylene copolymer, and mixtures thereof. Among these, the polypropylene-based resin constituting the expanded core layer is preferably a propylene homopolymer, an ethylene-propylene copolymer, an ethylene-propylene-butene copolymer, or a mixture of these copolymers and a polypropylene homopolymer, more preferably an ethylene-propylene copolymer or an ethylene-propylene-butene copolymer, and further preferably an ethylene-propylene copolymer.

«Flexural modulus Mc»

The polypropylene-based resin constituting the expanded core layer has a flexural modulus Mc of, from the viewpoint of further improving the rigidity and sliding properties of the molded article, preferably 550 MPa or more, more preferably 600 MPa or more, and further preferably 800 MPa or more, and preferably 1600 MPa or less, more preferably 1300 MPa or less, and further preferably 1200 MPa or less. That is, the flexural modulus Mc of the polypropylene-based resin constituting the expanded core layer is preferably from 550 to 1600 MPa, more preferably from 600 to 1300 MPa, and further preferably from 800 to 1200 MPa.

The flexural modulus Mc of the polypropylene-based resin is determined based on JIS K 7171:2016.

<<Ms/Mc and Mc-Ms»

A ratio Ms/Mc of the flexural modulus Ms of the polyethylene-based resin constituting the covering layer to the flexural modulus Mc of the polypropylene-based resin constituting the expanded core layer is, from the viewpoint of further improving the sliding properties and toughness of the molded article, preferably 0.15 or more, more preferably 0.2 or more, and further preferably 0.25 or more, and preferably 0.7 or less, and more preferably 0.6 or less. That is, the ratio Ms/Mc is preferably from 0.15 to 0.7, more preferably from 0.2 to 0.6, and further preferably from 0.25 to 0.6.

Further, from the same viewpoint, a difference [Mc-Ms] between the flexural modulus Mc of the polypropylene-based resin constituting the expanded core layer and the flexural modulus Ms of the polyethylene-based resin constituting the covering layer is preferably 300 MPa or more, more preferably 400 MPa or more, further preferably more than 500 MPa, and still further preferably 600 MPa or more, and preferably 1000 MPa or less. That is, the difference [Mc-Ms] is preferably from 300 to 1000 MPa, more preferably from 400 to 1000 MPa, further preferably more than 500 MPa and 1000 MPa or less, and still further preferably from 600 to 1000 MPa.

<<Melting point Tmc>>

The polypropylene-based resin constituting the expanded core layer has a melting point Tmc of, from the viewpoint of the rigidity, heat resistance, and the like of the molded article, preferably 125°C or higher, more preferably 130°C or higher, and further preferably 135°C or higher, and preferably 165°C or lower, more preferably 160°C or lower, and further preferably 155°C or lower. That is, the melting point Tmc of the polypropylene-based resin constituting the expanded core layer is preferably from 125 to 165°C, more preferably from 130 to 160°C, and further preferably from 135 to 155°C.

The melting point of the polypropylene-based resin is determined by, based on JIS K 7121:1987, conditioning a test piece in accordance with "(2) Case of measuring melting temperature after carrying out a certain heat treatment", acquiring a DSC curve for the conditioned test piece by increasing its temperature from 30°C to 200°C at a heating rate of 10°C/min, and taking the apex temperature of the melting peak associated with the melting of the resin on the DSC curve as the melting point. When a plurality of melting peaks appears on the DSC curve, the apex temperature of the melting peak with the largest area is taken as the melting point.

It is preferable that the melting point Tms of the polyethylene-based resin constituting the covering layer is lower than the melting point Tmc of the polypropylene-based resin constituting the expanded core layer. That is, it is preferable that Tms<Tmc. In this case, the moldability of the expanded bead is improved, and a molded article having excellent toughness can be obtained more easily. From this viewpoint, it is preferable that Tmc-Tms≥5, more preferable that Tmc-Tms≥10, and further preferable that Tmc-Tms≥15. On the other hand, from the viewpoint of suppressing separation between the expanded core layer and the covering layer and suppressing expanded beads from adhering to each other during the production of the expanded beads, it is preferable that Tmc-Tms≤35. From the above viewpoint, Tmc-Tms is preferably from 5 to 35°C, more preferably from 10 to 35°C, and further preferably from 15 to 35°C.

<<MFR>>

The polypropylene-based resin constituting the expanded core layer has a MFR of, from the viewpoint of improving expansion properties, preferably 2 g/10 min or more, more preferably 4 g/10 min or more, and further preferably 5 g/10 min or more, and preferably 15 g/10 min or less, more preferably 12 g/10 min or less, and further preferably 10 g/10 min or less. That is, the MFR of the polypropylene-based resin constituting the expanded core layer is preferably from 2 to 15 g/10 min, more preferably from 4 to 12 g/10 min, and further preferably from 5 to 10 g/10 min.

The MFR of the polypropylene-based resin is measured at a temperature of 230°C and a load of 2.16 kg in accordance with JIS K 7210-1:2014.

The expanded core layer may contain resins other than the polypropylene-based resin or other polymers such as an elastomer, as long as the object and advantageous effects of the present invention are not inhibited. However, the content of the other polymers in the expanded core layer is preferably 20% by mass or less, more preferably 10% by mass or less, further preferably 5% by mass or less, still further preferably 1% by mass or less, and may be 0% by mass.

The expanded core layer may contain additives as appropriate, as long as long as the advantageous effects of the present invention are not inhibited. Examples of additives added to the expanded core layer include the examples described as additives for the covering layer.

[Method for producing polypropylene-based resin expanded bead]

A method for producing the polypropylene-based resin expanded bead of the present invention is a method for producing a polypropylene-based resin expanded bead that comprises an expanded core layer composed of a polypropylene-based resin and a covering layer covering the expanded core layer, wherein a mass ratio of the expanded core layer to the covering layer is expanded core layer:covering layer = 97:3 to 88:12, the polypropylene-based resin expanded beads have a bulk expansion ratio of 5 times or more and 45 times or less, the covering layer is composed of a linear low density polyethylene, the linear low density polyethylene has a melting point of 105°C or higher and 130°C or lower, the linear low density polyethylene has a flexural modulus Ms of 120 MPa or more and 600 MPa or less, and the method comprises the following steps (A) to (C):

step (A): a dispersion step of dispersing a multi-layered resin particle having a core layer that is composed of a polypropylene-based resin and that is in a non-expanded state and a covering layer that is composed of a polyethylene-based resin and that covers the core layer in a dispersing medium in a sealable vessel;
step (B): a blowing agent impregnation step of impregnating the multi-layered resin particle with a blowing agent; and
step (C): an expansion step of producing an expanded bead by releasing the expandable multi-layered resin particle impregnated with the blowing agent together with the dispersing medium from in the sealable vessel into an atmosphere having a lower pressure than the pressure in the sealable vessel to form an expanded core layer by expanding at least the core layer.

The order of step (A) and step (B) is not limited, and step (A) and step (B) may even be performed simultaneously.

However, from the viewpoint of efficient production, it is preferable to perform step (B) after step (A).

<Method for producing multi-layered resin particle>

In the method for producing the multi-layered resin particle, for example, an extruder for forming the core layer, an extruder for forming the covering layer, and an extruder that has a die for forming a multi-layered strand and that is arranged on the exit side of those extruders can be used. The polypropylene-based resin constituting the core layer and the optionally-added additives are fed to the extruder for forming the core layer, and melt-kneaded to form a core layer-forming melt-kneaded material. The polyethylene-based resin constituting the covering layer and the optionally-added additives are fed to the extruder for forming the covering layer, and melt-kneaded to form a covering layer-forming melt-kneaded material. The core layer-forming melt-kneaded material and the covering layer-forming melt-kneaded material are introduced into the die for forming a multi-layered strand, and intermixed to form a composite having a core-sheath structure composed of a core layer in a non-expanded state and a covering layer in a non-expanded state that is covering the core layer. Then, a multi-layered resin particle having a core layer in a non-expanded state and a covering layer that is covering the core layer can be obtained by extruding the composite in the form of a strand through a small hole in the die arranged in the tip of the extruder, cooling in water, and then cutting into a predetermined mass with a pelletizer (strand cut method). As the method for cutting the extruded composite, in addition to the method described above, an underwater cut method, in which the composite is extruded and cut in water, a hot cut method, in which the composite is cut immediately after extrusion into air, and the like can be adopted.

(Particle size of multi-layered resin particle)

The particle size of the multi-layered resin particle is preferably from 0.1 to 5.0 mm, and more preferably from 0.5 to 3.0 mm.

(Mass of multi-layered resin particles)

The average value of the mass of the multi-layered resin particles is preferably adjusted to be from 0.1 to 20 mg, more preferably from 0.2 to 10 mg, further preferably from 0.3 to 5 mg, and still further preferably from 0.4 to 2 mg.

(Mass ratio of core layer to covering layer)

The mass ratio of the expanded core layer to the covering layer of the expanded bead can be adjusted based on the mass ratio between the non-expanded core layer and covering layer of the multi-layered resin particle. From this viewpoint, the mass ratio of the core layer to the covering layer of the multi-layered resin particle is preferably core layer:covering layer = 97:3 to 88:12, more preferably 96:4 to 89:11, and further preferably 95:5 to 90:10.

(Aspect ratio LID of multi-layered resin particle)

The multi-layered resin particle has an aspect ratio LID of, from the viewpoint of obtaining an expanded bead having excellent filling properties, preferably from 0.5 to 5.0, and more preferably from 1.0 to 4.0. The aspect ratio of the multi-layered resin particle is determined by measuring the maximum length (L) in the axis direction (that is, the extrusion direction) of the multi-layered resin particle and the maximum cross-sectional diameter (D) of the cross section of the resin particle in the direction orthogonal to the length direction of the maximum length with a caliper, calculating the ratio (L/D), and taking the arithmetic average of the values.

(Additives)

To the multi-layered resin particle comprising the core layer in a non-expanded state and the covering layer, additives can be added, if necessary, such as a cell adjusting agent, a flame retardant, a flame retardant synergist, a cell nucleating agent, a plasticizer, an antistatic agent, an antioxidant, a UV absorbing agent, a light stabilizer, a conductive filler, and an antimicrobial agent. In the case where additives are added, they can be added in step (A). Examples of the cell adjusting agent include: inorganic powders such as talc, mica, zinc borate, calcium carbonate, silica, titanium oxide, gypsum, zeolite, borax, aluminum hydroxide, and carbon; and organic powders such as phosphate nucleating agents, phenol nucleating agents, amine nucleating agents, and polyethylene fluoride resin powders. In the case where the cell adjusting agent is added, the content of the cell adjusting agent in the multi-layered resin particle is preferably 0.01 to 1 part by mass based on 100 parts by mass of the multi-layered resin particle.

The particle size, aspect ratio, and average mass of the multi-layered resin particles can be adjusted by cutting the multi-layered resin particle while appropriately changing the resin discharge speed, take-up speed, cutter speed, and the like in the strand cut method described above.

<Step (A)>

In step (A), for example, the multi-layered resin particle can be dispersed in a dispersing medium in a vessel that can be sealed and can withstand heating and pressurization, such as an autoclave, using a stirrer, for example.

The dispersing medium is not particularly limited as long as it is a dispersing medium that does not dissolve the multi-layered resin particle. Examples thereof include water and alcohols such as ethylene glycol, glycerin, methanol, and ethanol, and among the above, water is preferred.

In step (A), in order to prevent multi-layered resin particles from fusion bonding to each other, it is preferable to further add a dispersant to the dispersing medium. Examples of the dispersant include: organic dispersants such as polyvinyl alcohol, polyvinylpyrrolidone, and methylcellulose; and poorly soluble inorganic salts such as aluminum oxide, zinc oxide, kaolin, mica, magnesium phosphate, and tricalcium phosphate. These dispersants can be used singly or in combination of two or more types. Among the above, a poorly soluble inorganic salt is preferred, and kaolin is more preferred, because of its easy handling. In the case where a dispersant is added, it is preferable to add about 0.001 to 5 parts by mass of the dispersant based on 100 parts by mass of the multi-layered resin particle.

To the dispersing medium, a surfactant can also be further added. Examples of the surfactant include sodium dodecyl benzenesulfonate, sodium alkyl sulfonate, sodium oleate, sodium lauryl sulfate, sodium polyoxyethylene alkyl ether phosphate, sodium polyoxyethylene alkyl ether sulfate, and anionic surfactants and nonionic surfactants that are generally used in suspension polymerization. In the case where a surfactant is added, it is preferable to add about 0.001 to 1 part by mass of the surfactant based on 100 parts by mass of the multi-layered resin particle.

<Step (B)>

In step (B), for example, an expandable multi-layered resin particle can be obtained by heating the polypropylene-based resin constituting the core layer to a temperature equal to or higher than the temperature at which it softens, and impregnating the polypropylene-based resin with a blowing agent.

The blowing agent is not particularly limited as long as it can expand the multi-layered resin particle. Examples of the blowing agent include: inorganic physical blowing agents such as air, nitrogen, carbon dioxide, argon, helium, oxygen, and neon; and organic physical blowing agents including aliphatic hydrocarbons such as propane, normal butane, isobutane, normal pentane, isopentane, and normal hexane, alicyclic hydrocarbons such as cyclohexane and cyclopentane, halogenated hydrocarbons such as chlorofluoromethane, trifluoromethane, 1,1-difluoroethane, 1,1,1,2-tetrafluoroethane, methyl chloride, ethyl chloride, and methylene chloride, and dialkyl ethers such as dimethyl ether, diethyl ether, and methyl ethyl ether. Among the above, it is preferable to use an inorganic physical blowing agent that does not destroy the ozone layer and is inexpensive, it is more preferable to use nitrogen, air, or carbon dioxide, and it is particularly preferable to use carbon dioxide. These blowing agents are used singly or in combination of two or more types.

The amount of blowing agent added is determined by taking into account the bulk density of the desired expanded beads, the type of polypropylene-based resin, the type of blowing agent, and the like, but usually, based on 100 parts by mass of multi-layered resin particles, for an organic physical blowing agent, preferably from 5 to 50 parts by mass is added, and for an inorganic physical blowing agent, preferably from 0.1 to 30 parts by mass, and more preferably from 0.5 to 15 parts by mass, is added.

The heating temperature in step (B) is preferably equal to or higher than the melting point of the polypropylene-based resin, and no higher than the melting point +80°C, and specifically is preferably from 100°C to 230°C. The time for holding at the heating temperature is preferably 1 minute or more, and more preferably 20 minutes or more, and preferably 100 minutes or less, and more preferably 60 minutes or less. That is, the time for holding at the above heating temperature is preferably from 1 to 100 minutes, and more preferably from 20 to 60 minutes.

<Step (C)>

In step (C), for example, an expanded bead can be produced by releasing the heated expandable multi-layered resin particle impregnated with the blowing agent in step (B) into an atmosphere having a lower pressure than the pressure in the sealable vessel to expand at least the core layer to form an expanded core layer.

Specifically, while the pressure inside the sealable vessel is held at a pressure equal to or higher than the vapor pressure of the blowing agent, one end of the vessel that is below the water surface in the sealable vessel is opened so that the expandable multi-layered resin particles impregnated with the blowing agent is released together with the dispersing medium from the inside of the sealable vessel into an atmosphere having a lower pressure than the pressure inside the sealable vessel, usually atmospheric pressure, which causes at least the core layer of the expandable multi-layered resin particles to expand into an expanded core layer, enabling an expanded bead having a multi-layered structure that comprises an expanded core layer and a covering layer that covers the expanded core layer to be produced. Further, the expanded bead may also be produced by cooling the expandable multi-layered resin particle obtained by step (B), removing the cooled expandable multi-layered resin particle, and heating the expandable multi-layered resin particle with a heating medium such as hot air or steam to cause the particle to expand.

In step (C), the temperature during expansion is usually preferably from 110°C to 170°C. Further, the pressure in the sealable vessel is preferably 0.5 MPa (G) or more and 5 MPa (G) or less. Note that "0.5 MPa (G)" means 0.5 MPa in gauge pressure.

Although the above steps (A) to (C) are preferably carried out as a series of steps in a single sealable vessel, they may be performed as separate steps in such a way that the multi-layered resin particle and the like are removed in each step, added into a sealable vessel again, and subjected to the next step.

In addition, in the above steps, during heating in the sealable vessel, it is preferable to perform a one-stage step of holding at a temperature of (melting point of the polypropylene-based resin constituting the core layer -20°C) or more and less than (melting end temperature of the polypropylene-based resin constituting the core layer) for a sufficient period of time, preferably about 10 to 60 minutes. Further, after that, it is preferable to perform a two-stage step of adjusting the temperature from (melting point of the polypropylene-based resin -15°C) to (melting end temperature of the polypropylene-based resin +10°C), and, if necessary, further holding at that temperature for a sufficient period of time, preferably about 10 to 60 minutes. After that, an expanded bead having a crystal structure exhibiting the above-described high-temperature peak can be obtained by releasing the expandable resin particles containing the blowing agent from the sealable vessel into a low pressure to cause the resin particles to expand.

The expanded bead obtained as described above can also be subjected to a pressurization treatment with an inorganic gas such as air to increase internal pressure, and then heated with steam or the like to cause expansion (two-stage expansion), thereby enabling an expanded bead having an even higher expansion ratio (lower apparent density) to be obtained.

[Logistics cushioning material]

The logistics cushioning material of the present invention (hereinafter, also simply referred to as "logistics cushioning material") is a logistics cushioning material composed of a polypropylene-based resin expanded beads molded article formed by fusion bonding polypropylene-based resin expanded beads together (hereinafter, also simply referred to as "polypropylene-based resin expanded beads molded article", "expanded beads molded article", or "molded article"), wherein each polypropylene-based resin expanded bead has an expanded core layer composed of a polypropylene-based resin and a covering layer covering the expanded core layer, the covering layer is composed of a linear low density polyethylene, the polypropylene-based resin expanded beads molded article has a molded article expansion ratio of 5 times or more and 45 times or less, the polypropylene-based resin expanded beads molded article has a maximum bending strength of 0.3 MPa or more, the polypropylene-based resin expanded beads molded article has a product of a tensile strength S (MPa) and a tensile elongation E (%) of the polypropylene-based resin expanded beads molded article of 18 MPa·% or more, and a dynamic friction coefficient with respect to a polyvinyl chloride sheet is 0.4 or more and less than 0.7, and a static friction coefficient with respect to a polyvinyl chloride sheet is less than 1.0.

By having the above configuration, the logistics cushioning material of the present invention has excellent rigidity and can suppress damage to the packaged item and the expanded beads molded articles during transportation.

<Polypropylene-based resin expanded beads molded article>

(Molded article expansion ratio)

The polypropylene-based resin expanded beads molded article constituting the logistics cushioning material of the present invention has a molded article expansion ratio of 5 times or more and 45 times or less. If the molded article expansion ratio of the expanded beads molded article is too high, the toughness and sliding properties may be significantly reduced. Further, when transporting a heavy object as the packaged item, the rigidity may be insufficient. From these viewpoints, the molded article expansion ratio of the polypropylene-based resin expanded beads molded article constituting the logistics cushioning material is preferably 35 times or less, more preferably 30 times or less, and still further preferably 25 times or less. On the other hand, the molded article expansion ratio of the polypropylene-based resin expanded beads molded article is, from the viewpoint of a lighter weight, preferably 8 times or more, and more preferably 10 times or more. From the above viewpoints, the molded article expansion ratio of the polypropylene-based resin expanded beads molded article constituting the logistics cushioning material is preferably from 8 to 35 times, more preferably from 10 to 30 times, and further preferably from 10 to 25 times.

(Maximum bending strength)

The polypropylene-based resin expanded beads molded article has a maximum bending strength of 0.3 MPa or more. If the maximum bending strength of the expanded beads molded article is too low, the expanded beads molded article may be damaged when used as a logistics cushioning material for heavy objects, for example. From the same viewpoint, the maximum bending strength of the expanded beads molded article is preferably 0.4 MPa or more, and more preferably 0.5 MPa or more. The upper limit of the maximum bending strength of the expanded beads molded article is, although not particularly limited to, 4.5 MPa or less.

The maximum bending strength of the expanded beads molded article is measured in accordance with JIS K 7221-2:2006.

(Product of tensile strength S and tensile elongation E)

The product of a tensile strength S (MPa) and a tensile elongation E (%) of the polypropylene-based resin expanded beads molded article is 18 MPa·% or more. When the product of the tensile strength S and the tensile elongation E is equal to or more than the above value, the material has both an appropriate tensile strength and an appropriate tensile elongation as a logistics cushioning material, and does not break easily. Therefore, damage to the expanded beads molded article during transportation can be suppressed. From the same viewpoint, the product of the tensile strength S and the tensile elongation E of the expanded beads molded article is preferably 20 MPa·% or more, more preferably 21 MPa·% or more, and further preferably 25 MPa·% or more. The upper limit is, although not particularly limited to, 40 MPa·% or less. In addition, in the present specification, the product of the tensile strength S (MPa) and the tensile elongation E (%) is used as an index of toughness.

From the same viewpoint as above, the tensile strength S of the polypropylene-based resin expanded beads molded article is preferably 0.5 MPa or more, more preferably 0.6 MPa or more, and further preferably 0.7 MPa or more. Further, the tensile elongation E is preferably 20% or more, more preferably 25% or more, and further preferably 28% or more.

The tensile strength and the tensile elongation of the expanded beads molded article are measured by, in accordance with JIS K 6767: 1999, using a vertical slicer to cut out a piece of 120 mm × 25 mm × 10 mm so that all the sides are cut surfaces from the expanded beads molded article, then using a jigsaw to produce a dumbbell-shaped No. 1 test piece from the cut-out piece, and subjecting the test piece to a tensile test at a tensile speed of 500 mm/min. The measured maximum tensile stress during tensioning and elongation at break are defined as the tensile strength and the tensile elongation, respectively.

(Dynamic friction coefficient and static friction coefficient with respect to polyvinyl chloride sheet)

The polypropylene-based resin expanded beads molded article has a dynamic friction coefficient with respect to a polyvinyl chloride sheet of 0.4 or more and less than 0.7, and a static friction coefficient with respect to a polyvinyl chloride sheet of less than 1.0. If the dynamic friction coefficient of the expanded beads molded article with respect to the polyvinyl chloride sheet is too small, the packaged item may be damaged during transportation due to insufficient grip properties. On the other hand, if the dynamic friction coefficient of the expanded beads molded article with respect to the polyvinyl chloride sheet is too large, the sliding properties may be impaired, and the packaged item may be damaged during transportation. From this viewpoint, the dynamic friction coefficient with respect to the polyvinyl chloride sheet is preferably 0.6 or less. From the above viewpoints, the dynamic friction coefficient of the expanded beads molded article with respect to the polyvinyl chloride sheet is preferably from 0.4 to 0.6.

Further, if the static friction coefficient of the expanded beads molded article with respect to the polyvinyl chloride sheet is too large, the packaged item may be damaged during transportation. From this viewpoint, the static friction coefficient of the expanded beads molded article with respect to the polyvinyl chloride sheet is preferably 0.9 or less. The lower limit is, from the viewpoint of more reliably suppressing damage to the packaged item and the molded article during transportation, preferably 0.5 or more, and more preferably 0.6 or more. From the above viewpoints, the static friction coefficient of the expanded beads molded article with respect to the polyvinyl chloride sheet is preferably from 0.5 to 0.9, and more preferably from 0.6 to 0.9.

The dynamic friction coefficient and the static friction coefficient of expanded beads molded article with respect to the polyvinyl chloride sheet are determined by, in accordance with JIS K 7125: 1999, using a PVC sheet (soft vinyl chloride resin sheet, thickness: 3 mm) as a mating material, using the expanded beads molded article as a test piece measuring a skin surface (uncut surface) of the expanded beads molded article.

(Dynamic friction coefficient and static friction coefficient with respect to steel plate)

The polypropylene-based resin expanded beads molded article has a dynamic friction coefficient with respect to a steel plate of preferably 0.3 or more and less than 0.6. In this case, damage to the packaged item during transportation can be more reliably suppressed. Further, from the same viewpoint, the polypropylene-based resin expanded beads molded article has a static friction coefficient with respect to a steel plate of preferably from 0.2 to 0.5.

The dynamic friction coefficient and the static friction coefficient of the expanded beads molded article with respect to the steel plate are determined by, in accordance with JIS K 7125:1999, using a steel plate (manufactured by Nisshin Steel Co., Ltd., trade name: Tsukiboshi GL Color SELiOS/GL Enamel Clean/Straw Cream, thickness: 0.27 mm) as a mating material, using the expanded beads molded article as a test piece, and measuring the skin surface (uncut surface) of the expanded beads molded article.

(50% Compressive stress)

The polypropylene-based resin expanded beads molded article has a 50% compressive stress of, from the viewpoint of rigidity, preferably 0.30 MPa or more, more preferably 0.32 MPa or more, and further preferably 0.35 MPa or more. If the 50% compressive stress of the molded article is within the above range, damage to the expanded beads molded article can be more easily suppressed when a heavy object is used as a packaged item. On the other hand, from the viewpoint of improving the surface protection properties of the packaged item, the 50% compressive stress of the molded article is preferably 1.00 MPa or less, more preferably 0.80 MPa or less, and further preferably 0.50 MPa or less. From the above viewpoints, the 50% compressive stress of the polypropylene-based resin expanded beads molded article is preferably from 0.30 to 1.00 MPa, more preferably from 0.32 to 0.80 MPa, and further preferably from 0.35 to 0.50 MPa.

The 50% compressive stress of the expanded beads molded article is measured based on JIS K 6767:1999.

<Method for producing logistics cushioning material>

The logistics cushioning material of the present invention is composed of an expanded beads molded article. The expanded beads molded article is, for example, formed by molding the above-mentioned expanded bead in a mold.

In-mold molding of expanded beads can be carried out by filling expanded beads into a mold for molding and molding them by heating using a heating medium such as steam. Specifically, the expanded beads are filled into a mold for molding, and then, a heating medium such as steam is introduced into the mold for molding so that the expanded beads are expanded by heating and also fusion bonded to each other, thereby obtaining an expanded beads molded article to which the shape of the molding space has been imparted. Further, the in-mold molding is preferably performed by a pressurization molding method (for example, JP 51-22951 B) in which expanded beads are subjected to a pre-pressurization treatment with a pressurized gas such as air to increase the pressure in cells of the expanded bead so that the pressure in the expanded bead is adjusted to a pressure 0.01 to 0.3 MPa higher than atmospheric pressure, the expanded beads are then filled into a mold for molding under atmospheric pressure or under reduced pressure, and subsequently, a heating medium such as steam is supplied into the mold to heat and fusion bond the expanded beads. Alternatively, the molding can also be performed by a compression filling molding method (JP 4-46217 B) in which a mold for molding that has been pressurized to atmospheric pressure or higher by a compressed gas is filled with expanded beads that have been pressurized to that pressure or higher, and then a heating medium such as steam is supplied into the cavity to carry out heating, causing the expanded beads to be heated and fusion bonded. In addition, the molding can also be performed by an ambient pressure filling molding method (JP 6-49795 B) in which expanded beads with a high secondary expanding force obtained under special conditions are filled into the cavity of a mold for molding under atmospheric pressure or under reduced pressure, after which a heating medium such as steam is then supplied to carry out heating, thereby heating and fusion bonding the expanded beads, or by the method in which the above methods are combined (JP 6-22919 B) or the like.

EXAMPLES

Hereinafter, the present invention will be described in detail with reference to Examples. However, the present invention is not limited by these examples by any means.

For the resins, expanded beads, and expanded beads molded articles used in Examples and Comparative Examples, the following measurements or evaluations were carried out. Note that the physical properties of the expanded bead were measured using expanded beads that had been conditioned by allowing them to stand for 24 hours under conditions of 50% relative humidity, 23°C, and 1 atm. Also, the physical properties of the expanded beads molded article were measured and evaluated using a molded article that had been conditioned by allowing an expanded beads molded article after mold release to stand for 12 hours under conditions of 50% relative humidity, 80°C, and 1 atm.

[Measurements]

<Raw material resin>

(Density)

The density of the resin was measured according to method B (pycnometer method) described in JIS K 7112:1999.

(Melting point)

The melting point of the resin was determined by, based on JIS K 7121:1987, conditioning a test piece in accordance with "(2) Case of measuring melting temperature after carrying out a certain heat treatment", acquiring a DSC curve for the conditioned test piece by increasing its temperature from 30°C to 200°C at a heating rate of 10°C/min, and taking the apex temperature of the melting peak associated with the melting of the resin on the DSC curve as the melting point. When a plurality of melting peaks appeared on the DSC curve, the apex temperature of the melting peak with the largest area was taken as the melting point. The measurement device used was a heat flux differential scanning calorimetry device (manufactured by SII Nanotechnology Co., Ltd., model number: DSC7020).

(Flexural modulus)

The flexural modulus of the resin was measured based on the following method. First, the resin was heat pressed at 230°C to produce a sheet of 4 mm, and an 80 mm long × 10 mm wide × 4 mm thick test piece was cut from the sheet. The flexural modulus of this test piece was determined in accordance with JIS K 7171:2016. The radius R1 of the indenter and the radius R2 of the supporting table were both 5 mm, the distance between the supporting points was 64 mm, and the test rate was set to 2 mm/min.

(MFR)

The MFR of the resin was measured at a temperature of 190°C or 230°C and a load of 2.16kg in accordance with JIS K 7210-1:2014. When measuring the MFR of the polypropylene-based resin, the temperature of 230°C was used, and when measuring the MFR of the polyethylene-based resin, the temperature of 190°C was used.

<Expanded bead>

(Bulk expansion ratio)

The bulk expansion ratio of the expanded beads was determined as follows. Expanded beads were randomly taken out from a group of expanded beads, and charged into a graduated cylinder with a volume of 1 L. A large number of expanded beads were charged up to the 1 L gradation mark in a manner such that the expanded beads naturally settled. The mass of the charged expanded beads W1 (g) was divided by the volume V1 (1 (L)) to obtain (W1/V1), which was converted into units to obtain the bulk density ($kg/m^3$) of the expanded beads. Then, the density ($kg/m^3$) of the substrate resin of the expanded bead was divided by the bulk density ($g/cm^3$) of the expanded beads, which had been determined in advance.

(Average cell diameter)

The average cell diameter of the expanded beads was measured as follows. From a group of expanded beads, 20 expanded beads were randomly selected. The expanded beads were cut through the center and divided into two parts, and an enlarged photograph of the entire cross section was taken using a scanning electron microscope. In each cross-sectional photograph, four line segments were drawn at equal angles (45°) from the outermost surface of the expanded bead through the center to the outermost surface on the opposite side. The cell diameter of each expanded bead was determined by measuring the number of cells that intersect with each line segment and dividing the total length of the four line segments by the total number of cells that intersect with the line segment. The value obtained by arithmetic averaging these values was defined as the average cell diameter of the expanded beads.

(Aspect ratio)

The aspect ratio LID of the expanded bead was determined by measuring, for 100 randomly selected expanded beads, the maximum length (L) in the axis direction and the maximum cross-sectional diameter (D) of the cross section of the particle in the direction orthogonal to the length direction of the maximum length with a caliper, calculating the ratio (L/D), and taking the arithmetic average of the values.

(Closed cell ratio)

The closed cell ratio of the expanded bead was measured based on ASTM D2856-70 using an air comparison pycnometer. Specifically, first, a measurement sample was collected from conditioned expanded beads so that the bulk volume, that is, the value of the marked line when the expanded beads had naturally settled in a graduated cylinder, was approximately 20 cm$^3$, and the apparent volume of the measurement sample was then measured. The apparent volume of the measurement sample is, specifically, the volume corresponding to the amount of rise in the liquid level when the measurement sample was submerged in a graduated cylinder containing ethanol at a temperature of 23°C. The measurement sample whose apparent volume had been measured was thoroughly dried, and the true volume of the measurement sample to be measured was measured using an AccuPyc II 1340 manufactured by Shimadzu Corporation in accordance with procedure C described in ASTM-D2856-70. Then, using the values of these volume, the closed cell ratio of the measurement sample was calculated based on the following formula (1). The above operation was carried out five times using different measurement samples, and the arithmetic average value of the closed cell ratio obtained from these five measurements was defined as the closed cell ratio of the expanded bead.

$$\text{Closed cell ratio } (\%) = (Vx\text{-}W/\rho) \times 100/(Va\text{-}W/\rho) \ (1)$$

Note that, in the above formula, Vx (unit: cm$^3$) is the true volume of the expanded bead (that is, the sum of the volume of the resin constituting the expanded bead and the total cell volume of the closed cell portion within the expanded bead), Va (unit: cm$^3$) is the apparent volume of the expanded bead (that is, the volume measured from the rise in the liquid level when the expanded bead was submerged in a graduated cylinder containing ethanol), W (unit: g) is the mass of the measurement sample, and $\rho$ (unit: g/cm$^3$) is the density of the polypropylene-based resin constituting the expanded core layer.

(Heat of fusion of high-temperature peak)

The heat of fusion at the high-temperature peak of the expanded bead was determined as follows. About 3 mg of expanded beads were collected, and the expanded beads were heated from 23°C to 200°C at a heating rate of 10°C/min using a differential scanning calorimeter (DSC Q1000, manufactured by TA Instruments) to obtain a DSC curve having an endothermic peak ("resin-specific peak") due to melting specific to the polypropylene-based resin and one or more melting peaks (high-temperature peaks) on the higher temperature side of the endothermic peak. In the following description, the resin-specific peak will be referred to as A, and the high-temperature peak that appears on the higher temperature side will be referred to as B. A straight line ($\alpha$-$\beta$) was drawn connecting a point $\alpha$ on the DSC curve corresponding to 80°C and a point $\beta$ on the DSC curve corresponding to a melting end temperature T of the expanded bead. The "melting end temperature T" refers to the intersection between the DSC curve on the high temperature side of the high-temperature peak B and the high temperature side baseline. Next, a straight line was drawn parallel to the vertical axis of the graph from a point $\gamma$ on the DSC curve, which corresponds to the valley between the resin specific peak A and the high-temperature peak B, and the point where that line intersected with the straight line ($\alpha$-$\beta$) was defined as $\delta$. The area of the high-temperature peak B is the area of the portion bounded by the curve of the high-temperature peak B portion of the DSC curve, the line segment ($\delta$-$\beta$), and the line segment ($\gamma$-$\beta$), and this area was taken as the heat of fusion of the high-temperature peak.

<Expanded beads molded article>

(Maximum bending strength)

The maximum bending strength of the expanded beads molded article was obtained by measuring, in accordance with JIS K 7221-2:2006, the maximum point of the bending strength of the expanded beads molded article as the maximum bending strength. Specifically, a test piece of 120 mm long, 25 mm wide, and 20 mm thick was cut out from the expanded beads molded article, with the surface skin layer removed. Using this test piece, the maximum bending strength was measured based on JIS K 7221-2:2006, except that the pressure wedge was lowered at a rate of 10 mm/min, the distance between the supporting points was 100 mm, the radius of the tip of the supporting table was 5 mm, and the radius of the tip of the pressure wedge was set to 5 mm. The maximum bending strength was determined by removing the skin layer and then cutting out five test pieces from around the longitudinal center of the expanded beads molded article, performing the above measurement, and taking the arithmetic average value thereof as the maximum bending strength. The "skin" of the expanded beads molded article refers to the surface of the molded article that was in contact with the inner surface of the mold for molding during in-mold molding, and "skin layer" refers to the portion up to a depth of 10 mm from the surface of the molded article.

(Tensile strength and tensile elongation)

The tensile strength and the tensile elongation of the expanded beads molded article were measured by, in accordance with JIS K 6767:1999, using a vertical slicer to cut out a piece of 120 mm $\times$ 25 mm $\times$ 10 mm so that all the sides are cut surfaces from the center of the expanded beads molded article, then using a jigsaw to produce a dumbbell-shaped No. 1 test piece from the cut-out piece, and subjecting the test piece to a tensile test at a tensile speed of 500 mm/min. The measured maximum tensile stress during tensioning and elongation at break were defined as the tensile strength and the tensile elongation, respectively. The tensile strength and the tensile elongation were determined by removing the skin layer and then cutting out five test pieces from around the longitudinal center of the expanded beads molded article, and taking the arithmetic average value thereof as the tensile strength and the tensile elongation.

(50% Compressive stress)

The 50% compressive stress of the expanded beads molded article was determined by removing the skin layer from the expanded beads molded article, cutting out a test piece to be in a rectangular form of 50 mm long $\times$ 50 mm wide $\times$ 25 mm thick, determining the load at the time of 50% strain when the test piece was compressed at a rate of 10 mm/min using RTF-1350 manufactured by A&D Co., Ltd. in accordance with JIS K 6767:1999, and dividing the determined load by the pressure reception area of the test piece to calculate the 50% compressive stress (kPa). The 50% compressive stress was determined by removing the skin layer and then cutting out three test pieces from around the longitudinal center of the expanded beads molded article, and taking the arithmetic average value thereof.

(Dynamic friction coefficient and static friction coefficient with respect to PVC sheet)

The dynamic friction coefficient and the static friction coefficient of expanded beads molded article with respect to the polyvinyl chloride sheet were determined by, in accordance with JIS K 7125: 1999, using a PVC sheet (soft vinyl chloride resin sheet, thickness: 3 mm, surface hardness: 20) as a mating material, using the expanded beads molded article as a test piece measuring a skin surface (uncut surface) of the expanded beads molded article.
Specifically, three samples of 63 mm long $\times$ 63 mm wide $\times$ 10 mm thick having a skin on one side were cut out from the expanded beads molded article obtained in the Examples and Comparative Examples for use as test pieces. Note that the expanded beads molded article of the test samples had been obtained by in-mold molding using a mold with a smooth surface. The above-described PVC sheet was placed on a horizontal surface, the sample was placed on top of the PVC sheet with the skin surface (area: 40 cm$^2$) facing down (toward the PVC sheet), and a weight was placed on the PVC sheet so that a normal force of 9.8 N was applied. The upper side of the sample was covered with 1 mm-thick felt so that uniform pressure distribution could be applied thereto.
The measurement was carried out using a Tensilon universal material testing machine. The sample was moved 70 mm in horizontal directions on the PVC sheet at a speed of 100 mm/min, and the load (unit: N) and the moved distance were recorded to obtain a load-displacement curve.
The static friction coefficient was calculated by dividing the initial maximum load value (static load) (Fs) by the normal force (9.8 N) on the load displacement curve. Specifically, the static friction coefficient is expressed by the following formula. The local maximum value can be determined, for example, by obtaining an enlarged view of the load displacement curve.

$$\text{Static friction coefficient} = F_S/9.8$$

The dynamic friction coefficient in the present invention is determined by taking the average value of the dynamic loads at the detected measured displacements from a displacement (moving distance) of 10 mm to 60 mm on the load displacement curve as a dynamic load ($F_D$), and dividing that by the normal force 9.8 N. Specifically, dynamic friction coefficient is expressed by the following formula.

$$\text{Dynamic friction coefficient} = F_D/9.8$$

In the present invention, since the sample is an expanded body, the value of the dynamic friction force may not be stable immediately after relative displacement movement starts, and so the value from a displacement of 10 mm is used.

The dynamic friction coefficient and static friction coefficient of the expanded beads molded article with respect to the polyvinyl chloride sheet were the arithmetic average values of the above three samples.

The surface hardness of the PVC sheet was determined as follows. A test piece was prepared by stacking soft vinyl chloride sheets to a thickness of 10 mm. The test piece was left standing for one day in an environment having a temperature of 23°C and a relative humidity of 50%. A type C durometer (Asker rubber hardness meter type C) in accordance with JIS K 7312: 1996 was brought into contact with the skin surface of the test piece, and the value on the scale was recorded 3 seconds after contact. This operation was performed at five randomly selected points on the surface, and the arithmetic mean of the obtained scale values was taken as the surface hardness of the PVC sheet.

(Dynamic friction coefficient and static friction coefficient with respect to steel plate)

The dynamic friction coefficient and the static friction coefficient of the expanded beads molded article with respect to a steel plate were determined in the same manner as the measurement of the dynamic friction coefficient and the static friction coefficient with respect to a PVC sheet, except that, in accordance with JIS K 7125: 1999, a steel plate (manufactured by Nisshin Steel Co., Ltd., trade name: Tsukiboshi GL Color SELiOS/GL Enamel Clean/Straw Cream, thickness: 0.27 mm) was used as a mating material.

(Vibration test)

A box-shaped expanded beads molded article was produced by, in <Production of expanded beads molded article> described below, changing the shape of the mold for molding. The box-shaped molded article had external dimensions of 150 mm in length, 150 mm in width, and 120 mm in height, and a thickness of 15 mm at the side wall and bottom part, namely, had internal dimensions of 120 mm in length, 120 mm in width, and 105 mm in height. This box-shaped molded article was fixedly arranged so as not to move on the mesh in a rotary sieve device (manufactured by Tokuju Corporation, trade name: Gyro Shifter GS-A1P type), and as a package item, a rectangular metal piece (iron steel, density 7.85 g/cm$^3$, 110 mm long, 110 mm wide, 10 mm high) weighing 1 kg was placed without being fixed near the center of the box-shaped molded article. A vibration test was conducted by applying rotational vibration at 260 revolutions/minute. Vibration was stopped one minute after the start of vibration.

The expanded beads molded article and the packaged item were then observed. Cases where no damage such as chipping or cracking was observed were rated "A", and cases where damage such as chipping or cracking was observed were rated "B".

[Raw materials]

Tables 1 and 2 show the resins used in the Examples and Comparative Examples.

Table 1

| | Type | Polymerization catalyst | Density (g/cm$^3$) | Melting point (°C) | MFR (g/10 min) | Flexural modulus Ms (MPa) |
|---|---|---|---|---|---|---|
| Resin 1 | Linear low density polyethylene | Metallocene | 0.924 | 120 | 3.8 | 270 |
| Resin 2 | Linear low density polyethylene | Metallocene | 0.910 | 112 | 10.0 | 150 |
| Resin 3 | Linear low density polyethylene | Metallocene | 0.938 | 127 | 3.8 | 550 |
| Resin 4 | Linear low density polyethylene | Metallocene | 0.913 | 121 | 8.0 | 110 |
| Resin 5 | Polyethylene | Metallocene | 0.906 | 102 | 10.5 | 110 |
| Resin 6 | High-density polyethylene | - | 0.951 | 129 | 9.1 | 830 |
| Resin 7 | Low density polyethylene | - | 0.921 | 124 | 1.0 | 290 |
| Resin 8 | Polypropylene | - | 0.900 | 131 | 6.0 | 650 |

(continued)

| | Type | Polymerization catalyst | Density (g/cm³) | Melting point (°C) | MFR (g/10 min) | Flexural modulus Ms (MPa) |
|---|---|---|---|---|---|---|
| Resin 9 | Linear low density polyethylene | Ziegler-Natta | 0.925 | 123 | 2.3 | 275 |

Table 2

| | Type | Ethylene component content (% by mass) | Density (g/cm³) | Melting point (°C) | MFR (g/10 min) | Flexural modulus Mc (MPa) |
|---|---|---|---|---|---|---|
| PP1 | Ethylene-propylene random copolymer | 3.1 | 0.900 | 142 | 8 | 980 |
| PP2 | Ethylene-propylene random copolymer | 4.2 | 0.900 | 134 | 7 | 600 |

Example 1

<Production of multi-layered resin particle>

The polypropylene-based resin shown in Table 3 was melt-kneaded in an extruder at a maximum set temperature of 240°C to obtain a resin melt for the core layer. At the same time, the polyethylene-based resin or polypropylene-based resin shown in Table 3 was melt-kneaded in an extruder at a maximum set temperature of 240°C to obtain a resin melt for the covering layer.

Next, the resin melt for the core layer and the resin melt for the covering layer were fed to a coextrusion die. In the die, the resin melt for the covering layer was laminated so as to cover the periphery of the resin melt for the core layer, the resultant laminate was extruded as a strand, cooled with water, cut with a pelletizer to a mass of about 1.0 mg, and dried to provide multi-layered resin particles (particle size: 2.2 mm, aspect ratio L/D: 3.4).

The mass ratio of the discharge amount of the resin melt for the core layer and the discharge amount of the resin melt for the covering layer at this time was set to core layer:covering layer = 90:10. In addition, the multi-layered resin particles were obtained by feeding zinc borate into the extruder as a cell nucleating agent for the resin melt for the core layer and a lubricant (1000 ppm of erucic acid amide (0.1 parts by mass based on 100 parts by mass of base polymer)) for the resin melt for the covering layer. At this time, the cell nucleating agent was supplied as a masterbatch, and the 1000 ppm by mass of zinc borate was contained as a cell nucleating agent only in the polypropylene-based resin of the core layer, and no cell nucleating agent was contained in the polymer of the covering layer.

<Production of expanded bead>

50 kg of the multi-layered resin particles were charged into a 400 L sealable vessel along with 280 L of water as a dispersing medium, and 0.008 parts by mass of kaolin as a dispersant and 0.004 parts by mass of a surfactant (sodium alkylbenzene sulfonate), and 0.0002 parts by mass of aluminum sulfate as dispersion aids based on 100 parts by mass of the multi-layered resin particles were further added into the sealable vessel. Carbon dioxide as a blowing agent was supplied into the sealable vessel so that the pressure inside the container was 1.5 MPa (carbon dioxide pressure), the mixture was heated to 150.6°C (expansion temperature) while stirring, and held at the same temperature for 6 minutes. Then, the contents of the vessel were released to atmospheric pressure to obtain expanded beads 1. The covering layer of the expanded bead was in a non-expanded state.

<Production of expanded beads molded article>

The expanded beads 1 were pressurized with air to give an internal pressure of 0.18 MPa (G), and then the expanded beads 1 were filled into a flat mold that was 300 mm long × 250 mm wide × 60 mm thick. The amount of cracking when filling the expanded beads was 10% (that is, 6 mm). Next, steam was supplied from both sides of the mold for 5 seconds to carry out preheating (exhaust step), and then heating was carried out from one side of the mold until the steam reached a pressure 0.08 MPa (G) lower than the molding pressure of 0.26 MPa (G) listed in Table 3. Next, heating was carried out from the other side of the mold until the steam reached a pressure 0.04 MPa (G) lower than the molding pressure listed in Table 3, and then heating was carried out until the steam reached the molding pressure of 0.26 MPa (G) listed in Table 3 (main heating). After heating, the pressure was released and the molded article was cooled with water until the surface pressure due to the expansion force of the molded article reached 0.04 MPa (G). Then, the mold was opened and the molded article was taken out. The obtained molded article was cured in an oven at 80°C for 12 hours to obtain an expanded beads molded article having the molded article expansion ratio shown in Table 3.

Examples 2 to 6 and Comparative Examples 1 to 7

Expanded beads and expanded beads molded articles were obtained in the same manner as in Example 1, except that the raw materials and conditions were changed to those shown in Table 3.

Table 3

| | | | Example | | | | | | Comparative Example | | | | | | |
|---|---|---|---|---|---|---|---|---|---|---|---|---|---|---|---|
| | | | 1 | 2 | 3 | 4 | 5 | 6 | 1 | 2 | 3 | 4 | 5 | 6 | 7 |
| Covering layer | Type | | Resin 1 | Resin 2 | Resin 3 | Resin 1 | Resin 1 | Resin 1 | Resin 4 | Resin 5 | Resin 6 | Resin 7 | Resin 8 | Resin 9 | Resin 1 |
| | Melting point Tms | °C | 120 | 112 | 127 | 120 | 120 | 120 | 121 | 102 | 129 | 124 | 131 | 123 | 120 |
| | Flexural modulus Ms | MPa | 270 | 150 | 550 | 270 | 270 | 270 | 110 | 110 | 830 | 290 | 650 | 275 | 270 |
| Core layer | Type | - | PP1 | PP1 | PP1 | PP1 | PP2 | PP1 | PP1 | PP1 | PP1 | PP1 | PP1 | PP1 | PP1 |
| | Melting point Tmc | °C | 142 | 142 | 142 | 142 | 134 | 142 | 142 | 142 | 142 | 142 | 142 | 142 | 142 |
| | Flexural modulus Mc | MPa | 980 | 980 | 980 | 980 | 600 | 980 | 980 | 980 | 980 | 980 | 980 | 980 | 980 |
| Relationship between covering layer and core layer | Tmc-Tms | °C | 22 | 30 | 15 | 22 | 14 | 22 | 21 | 40 | 13 | 18 | 11 | 19 | 22 |
| | Mc-Ms | MPa | 710 | 830 | 430 | 710 | 330 | 710 | 870 | 870 | 150 | 690 | 330 | 705 | 710 |
| | Ms/Mc | - | 0.28 | 0.15 | 0.56 | 0.28 | 0.45 | 0.28 | 0.11 | 0.11 | 0.85 | 0.30 | 0.66 | 0.28 | 0.28 |

| | | | Example | | | | | | Comparative Example | | | | | | |
|---|---|---|---|---|---|---|---|---|---|---|---|---|---|---|---|
| | | | 1 | 2 | 3 | 4 | 5 | 6 | 1 | 2 | 3 | 4 | 5 | 6 | 7 |
| Expanded bead | Mass ratio of expanded core layer to covering layer (expanded core layer: covering layer) | - | 90:10 | 90:10 | 90:10 | 90:10 | 90:10 | 95:5 | 90:10 | 90:10 | 90:10 | 90:10 | 97:3 | 90:10 | 85:15 |
| | Bulk expansion ratio | times | 21.7 | 22.2 | 21.4 | 12.4 | 21.0 | 22.3 | 23.4 | 22.2 | 21.7 | 22.5 | 23.1 | 72.0 | 20.6 |
| | Average cell diameter | μm | 120 | 120 | 125 | 115 | 95 | 130 | 120 | 115 | 120 | 120 | 130 | 120 | 90.0 |
| | Aspect ratio LID | - | 1.1 | 1.1 | 1.1 | 1.1 | 1.2 | 1.1 | 1.1 | 1.1 | 1.1 | 1.1 | 1.1 | 1.1 | 1.2 |
| | Closed cell ratio | % | 97 | 97 | 98 | 97 | 96 | 97 | 95 | 97 | 96 | 96 | 97 | 95 | 96 |
| | Heat of fusion of high-temperature peak | J/g | 14.5 | 14.6 | 13.7 | 14.6 | 15.2 | 14.4 | 14.6 | 14.0 | 14.2 | 13.7 | 15.0 | 11.5 | 13.4 |
| | Molding pressure | MPa(G) | 0.26 | 0.26 | 0.26 | 0.34 | 0.26 | 0.26 | 0.26 | 0.26 | 0.28 | 0.26 | 0.28 | 0.28 | 0.28 |
| | Molded article expansion ratio | times | 20.0 | 20.6 | 18.5 | 10.2 | 18.2 | 20.4 | 20.8 | 19.5 | 18.9 | 20.2 | 20.7 | 62.9 | 18.9 |
| | Maximum bending strength | MPa | 0.51 | 0.51 | 0.48 | 1.1 | 0.49 | 0.55 | 0.48 | 0.44 | 0.49 | 0.48 | 0.55 | 0.13 | 0.44 |
| | 50% Compressive stress | MPa | 0.36 | 0.37 | 0.35 | 0.8 | 0.34 | 0.38 | 0.36 | 0.33 | 0.36 | 0.36 | 0.38 | 0.12 | 0.34 |

EP 4 477 692 A1

(continued)

| | | | Example | | | | | | Comparative Example | | | | | | |
|---|---|---|---|---|---|---|---|---|---|---|---|---|---|---|---|
| | | | 1 | 2 | 3 | 4 | 5 | 6 | 1 | 2 | 3 | 4 | 5 | 6 | 7 |
| Expanded beads molded article | Tensile strength S | MPa | 0.81 | 0.74 | 0.70 | 1.30 | 0.83 | 0.84 | 0.67 | 0.59 | 0.65 | 0.67 | 0.65 | 0.19 | 0.54 |
| | Tensile elongation E | % | 33.6 | 28.8 | 28.6 | 27.0 | 38.0 | 28.6 | 26.0 | 24.2 | 22.8 | 26.0 | 21.0 | 27.6 | 30.8 |
| | S×E | - | 27.2 | 21.3 | 20.0 | 35.1 | 31.5 | 24.0 | 17.4 | 14.3 | 14.8 | 17.4 | 13.7 | 5.2 | 16.6 |
| | Dynamic friction coefficient (PVC) | - | 0.53 | 0.57 | 0.43 | 0.44 | 0.63 | 0.58 | 0.67 | 0.75 | 0.35 | 0.62 | 0.79 | 1.1 | 0.38 |
| | Dynamic friction coefficient (steel plate) | - | 0.32 | 0.57 | 0.39 | 0.31 | 0.51 | 0.39 | 0.61 | 0.88 | 0.25 | 0.44 | 0.28 | 0.9 | 0.27 |
| | Static friction coefficient (PVC) | - | 0.79 | 0.69 | 0.93 | 0.69 | 0.94 | 0.84 | 1.10 | 1.07 ' | 0.91 | 1.04 | 1.43 | 1.20 | 0.77 |
| | Static friction coefficient (steel plate) | - | 0.31 | 0.47 | 0.34 | 0.27 | 0.47 | 0.37 | 0.52 | 0.72 | 0.20 | 0.46 | 0.28 | 0.80 | 0.24 |
| Vibration test | | | A | A | A | A | A | A | B | B | B | B | B | B | B |

It was found that the expanded beads molded articles of the Examples had a high maximum bending strength, a high 50% compressive stress, and excellent rigidity. It was found that the expanded beads molded articles of the Examples had a high product of tensile strength and tensile elongation, and thus had excellent toughness. In addition, the expanded beads molded articles of the Examples had a dynamic friction coefficient with respect to a polyvinyl chloride sheet within a specific range and a static friction coefficient with respect to polyvinyl chloride sheet equal to or less than a specific value, and thus had appropriate grip properties as well as appropriate sliding properties. It was also found that the expanded beads molded articles of the Examples suppressed damage to the packaged item and the expanded beads molded article in the vibration test.

Therefore, when the expanded beads molded articles of the Examples are used as, for example, a logistics cushioning material, damage to the packaged item and the expanded beads molded article during transportation can be suppressed.

In Comparative Example 1, in which the polyethylene-based resin constituting the covering layer of the expanded bead had a low flexural modulus, the product of the tensile strength and the tensile elongation of the molded article was low, toughness was poor, and the static friction coefficient of the molded article with respect to the PVC sheet was too large. As a result, in the vibration test of the expanded beads molded article, damage such as chipping or cracking was observed in the expanded beads molded article or packaged item.

In Comparative Example 2, in which the polyethylene-based resin constituting the covering layer of the expanded bead had a low melting point and flexural modulus, the product of the tensile strength and the tensile elongation of the molded article was low, toughness was poor, the sliding properties were impaired because the dynamic friction coefficient of the molded article with respect to the PVC sheet was too large, and the static friction coefficient of the molded article with respect to the PVC sheet was too large. As a result, in the vibration test of the expanded beads molded article, damage such as chipping or cracking was observed in the expanded beads molded article or packaged item.

In Comparative Example 3, in which the polyethylene-based resin constituting the covering layer of the expanded bead was high-density polyethylene and had a high flexural modulus, the product of the tensile strength and the tensile elongation of the molded article was low, toughness was poor, and the dynamic friction coefficient of the molded article with respect to the PVC sheet was too small. As a result, grip properties were insufficient, and in the vibration test of the expanded beads molded article, damage such as chipping or cracking was observed in the expanded beads molded article or packaged item.

In Comparative Example 4, in which the polyethylene-based resin constituting the covering layer of the expanded bead was low density polyethylene, even though the flexural modulus and the melting point were within the desirable range of the present invention, the product of the tensile strength and the tensile elongation of the molded article was low, toughness was poor, and the static friction coefficient of the molded article with respect to the PVC sheet was too large. As a result, in the vibration test of the expanded beads molded article, damage such as chipping or cracking was observed in the expanded beads molded article or packaged item.

In Comparative Example 5, in which the resin constituting the covering layer of the expanded bead was a polypropylene-based resin, the product of the tensile strength and the tensile elongation of the molded article was low, toughness was poor, and the dynamic friction coefficient and the static friction coefficient of the molded article with respect to the PVC sheet were too large. As a result, in the vibration test of the expanded beads molded article, damage such as chipping or cracking was observed in the expanded beads molded article or packaged item.

In Comparative Example 6, in which the bulk expansion ratio of the expanded beads was high, rigidity was extremely poor. Further, the product of the tensile strength and the tensile elongation of the molded article was extremely low, toughness was poor, and the dynamic friction coefficient and the static friction coefficient of the molded article with respect to the PVC sheet were too large. As a result, in the vibration test of the expanded beads molded article, damage such as chipping or cracking was observed in the expanded beads molded article or packaged item.

In Comparative Example 7, in which the mass ratio of the covering layer was large, the product of the tensile strength and the tensile elongation of the molded article was low, toughness was poor, and grip properties were insufficient because the dynamic friction coefficient of the molded article with respect to the PVC sheet was too small. As a result, in the vibration test of the expanded beads molded article, damage such as chipping or cracking was observed in the expanded beads molded article or packaged item.

INDUSTRIAL APPLICABILITY

The expanded bead of the present invention can produce an expanded beads molded article that has excellent rigidity as well as improved toughness, grip properties, and sliding properties, and so can be suitably used as a logistics cushioning material of packaged items made from various members.

**Claims**

1.  A polypropylene-based resin expanded bead comprising:

    an expanded core layer composed of a polypropylene-based resin; and
    a covering layer covering the expanded core layer, wherein
    a mass ratio of the expanded core layer to the covering layer is expanded core layer:covering layer = 97:3 to 88:12,
    the polypropylene-based resin expanded beads have a bulk expansion ratio of 5 times or more and 45 times or less,
    the covering layer is composed of a linear low density polyethylene,
    the linear low density polyethylene has a melting point of 105°C or higher and 130°C or lower, and
    the linear low density polyethylene has a flexural modulus Ms of 120 MPa or more and 600 MPa or less.

2.  The polypropylene-based resin expanded bead according to claim 1, wherein the linear low density polyethylene is a resin polymerized using a metallocene polymerization catalyst.

3.  The polypropylene-based resin expanded bead according to claim 1 or 2, wherein the polypropylene-based resin has a flexural modulus Mc of 550 MPa or more and 1600 MPa or less.

4.  The polypropylene-based resin expanded bead according to any one of claims 1 to 3, wherein a ratio Ms/Mc of the flexural modulus Ms of the linear low density polyethylene to a flexural modulus Mc of the polypropylene-based resin is 0.2 or more and 0.6 or less.

5.  The polypropylene-based resin expanded bead according to any one of claims 1 to 4, wherein the expanded beads have an average cell diameter of 50 $\mu$m or more and 200 $\mu$m or less.

6.  The polypropylene-based resin expanded bead according to any one of claims 1 to 5, wherein the expanded bead has an aspect ratio L/D of 0.8 or more and 1.3 or less.

7.  The polypropylene-based resin expanded bead according to any one of claims 1 to 6, wherein the linear low density polyethylene has a melt flow rate measured at 190°C and a load of 2.16 kg of 2.5 g/10 min or more and 12 g/10 min or less.

8.  The polypropylene-based resin expanded bead according to any one of claims 1 to 7, wherein the linear low density polyethylene has a flexural modulus Ms of more than 250 MPa and 500 MPa or less.

9.  A method for producing a polypropylene-based resin expanded bead that comprises an expanded core layer composed of a polypropylene-based resin and a covering layer covering the expanded core layer, wherein

    a mass ratio of the expanded core layer to the covering layer is expanded core layer:covering layer = 97:3 to 88:12,
    the polypropylene-based resin expanded beads have a bulk expansion ratio of 5 times or more and 45 times or less,
    the covering layer is composed of a linear low density polyethylene,
    the linear low density polyethylene has a melting point of 105°C or higher and 130°C or lower,
    the linear low density polyethylene has a flexural modulus Ms of 120 MPa or more and 600 MPa or less, and
    the method comprises the following steps (A) to (C):

    step (A): a dispersion step of dispersing a multi-layered resin particle having a core layer that is composed of a polypropylene-based resin and that is in a non-expanded state and a covering layer that is composed of a polyethylene-based resin and that covers the core layer in a dispersing medium in a sealable vessel;
    step (B): a blowing agent impregnation step of impregnating the multi-layered resin particle with a blowing agent; and
    step (C): an expansion step of producing an expanded bead by releasing the expandable multi-layered resin particle impregnated with the blowing agent together with the dispersing medium from in the sealable vessel into an atmosphere having a lower pressure than the pressure in the sealable vessel to form an expanded core layer by expanding at least the core layer.

10. A logistics cushioning material comprising a polypropylene-based resin expanded beads molded article formed by fusion bonding polypropylene-based resin expanded beads together, wherein

each polypropylene-based resin expanded bead has an expanded core layer composed of a polypropylene-based resin and a covering layer covering the expanded core layer,

the covering layer is composed of a linear low density polyethylene,

the polypropylene-based resin expanded beads molded article has a molded article expansion ratio of 5 times or more and 45 times or less,

the polypropylene-based resin expanded beads molded article has a maximum bending strength of 0.3 MPa or more,

the polypropylene-based resin expanded beads molded article has a product of a tensile strength S (MPa) and a tensile elongation E (%) of the polypropylene-based resin expanded beads molded article of 18 MPa·% or more, and

a dynamic friction coefficient with respect to a polyvinyl chloride sheet is 0.4 or more and less than 0.7, and a static friction coefficient with respect to a polyvinyl chloride sheet is less than 1.0.

11. The logistics cushioning material according to claim 10, having a dynamic friction coefficient with respect to a steel plate of 0.3 or more and less than 0.6, and a static friction coefficient with respect to a steel plate of 0.5 or less.

## INTERNATIONAL SEARCH REPORT

| | International application No. |
|---|---|
| | **PCT/JP2023/001337** |

### A. CLASSIFICATION OF SUBJECT MATTER

***C08J 9/18***(2006.01)i
FI: C08J9/18 CES

According to International Patent Classification (IPC) or to both national classification and IPC

### B. FIELDS SEARCHED

Minimum documentation searched (classification system followed by classification symbols)

C08J9/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-115785 A (JSP CORP.) 15 April 2004 (2004-04-15)<br>entire text | 1–11 |
| A | JP 2005-139350 A (JSP CORP.) 02 June 2005 (2005-06-02)<br>entire text | 1–11 |
| A | JP 2021-143238 A (JSP CORP.) 24 September 2021 (2021-09-24)<br>entire text | 1–11 |
| A | JP 2015-137061 A (JSP CORP.) 30 July 2015 (2015-07-30)<br>entire text | 1–11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001337**

| Patent document cited in search report | | | Publication date (day/month/year) | Patent family member(s) | | | Publication date (day/month/year) |
|---|---|---|---|---|---|---|---|
| JP | 2004-115785 | A | 15 April 2004 | US 2005/0113473 A1 entire text | | | |
| JP | 2005-139350 | A | 02 June 2005 | (Family: none) | | | |
| JP | 2021-143238 | A | 24 September 2021 | CN 114981347 A entire text | | | |
| JP | 2015-137061 | A | 30 July 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011016914 A
- JP 51022951 B
- JP 4046217 B
- JP 6049795 B
- JP 6022919 B